# EUROPEAN PATENT SPECIFICATION

(11) **EP 2 631 965 B1**
(45) Date of publication and mention of the grant of the patent: **07.09.2016**
(21) Application number: 13154775.4
(22) Date of filing: 11.02.2013
(51) Int. Cl.: H01M 2/10, H01M 10/04

(54) **Battery module**
Batteriemodul
Module de batterie

(30) Priority: 27.02.2012 US 201261603582 P; 24.07.2012 US 201213556622
(43) Date of publication of application: 28.08.2013
(73) Proprietor: Samsung SDI Co., Ltd., Yongin-si, Gyeonggi-do (KR); ROBERT BOSCH GMBH, 70442 Stuttgart (DE)
(72) Inventor: Ahn, Jang-Gun, Yongin-si, Gyeonggi-do (KR)
(74) Representative: Gulde & Partner

(56) References cited:
- EP-A1- 2 330 657
- EP-A1- 2 390 941
- FR-A1- 2 344 133
- US-A1- 2011 104 543

## Description

### BACKGROUND

### 1. Field

The present invention relates to a battery module, and more particularly, to a battery module having a new structure including a plurality of battery cells.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like.

As devices using a battery module have various external appearances, it is required that the shape of the battery module is varied corresponding to the various external appearances. Particularly, demand on a light and small-sized battery module is increased. Since the battery module basically requires safety, studies on the structure of the battery module have been conducted in many fields so as to satisfy these requirements. Structures for including a plurality of battery cells are disclosed in European Patent Application 2 330 657 A1, United States Patent Application 2011/0104543 A1, in European Patent application 2 390 941 A1 and in French Patent Application 76 06705.

### SUMMARY

The invention provide a battery module having improved productivity using a new member.

Embodiments also provide a system for a battery module in which battery cells are not moved by an external force but firmly fixed.

The present invention is a system for containing a stack of battery cells according to claim 1.

The first end plate includes a first coupling portion and the second end plate includes a second coupling portion. Third and fourth coupling portions corresponding to the first and second coupling portions are provided at the one and the other ends of the support plates, respectively.

The first or second end plate include a first or second base portion for facing the battery cells, respectively. The first coupling portion is provided to the first base portion and the second coupling portion is provided to the second base portion.

The first coupling portion of the first end plate or the second coupling portion of the second end plate include an extending portions respectively extended from both sides of the first or second base portion, and a bending portion bent in the opposite direction of the battery cells from each of the extending portions.

The length of each of the extending portions corresponds to the thickness of the respective one of the support plates.

In an embodiment, the third coupling portion may include one or more openings and the fourth coupling portion may include one or more projections.

The second and fourth coupling portions may include through-holes provided to correspond to each other.

The bending portion may include one or more projections at a portion of the bending portion contacting the respective one of the support plates, and the support plates may include one or more grooves respectively corresponding to the projections.

The support plate may include a pair of first end plates supporting side opposing surfaces of the battery cells and a second end plate supporting a bottom surface of the battery cells connecting the opposing side surfaces.

The first end plate may be integrally provided by being coupled to the second end plate. The first and second end plates may have the first and second coupling portions provided to not only at both sides but also at bottoms of the first and second base portions and the first and second coupling portions at the bottoms may be adapted for being coupled to the second plate.

As described above, according to the present invention, it is possible to provide a battery module having improved productivity using a new member.

Further, it is possible to provide a battery module in which battery cells are not moved by an external force but firmly fixed.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to an embodiment of the present invention.
FIG. 2 is an exploded perspective view of the battery module shown in FIG. 1.
FIG. 3 is a perspective view showing a first end end plate and a support plate, shown in FIG. 1.
FIG. 4 is an enlarged view showing portion A of FIG. 1.
FIG. 5 is a perspective view showing a second end plate and the support plate, shown in FIG. 1.
FIG. 6 is a perspective view showing a first end plate and a support plate according to another embodiment of the present invention.
FIG. 7A is an enlarged view showing first and third coupling members.
FIG. 7B is a sectional view taken along line X-X' of FIG. 7A.
FIG. 8 is a perspective view of a battery module according to still another embodiment of the present invention.
FIG. 9 is a perspective view showing first and second end plates and a support plate, shown in FIG. 8.

### DETAILED DESCRIPTION

Embodiments of the present invention will be described with reference to the accompanying drawings.

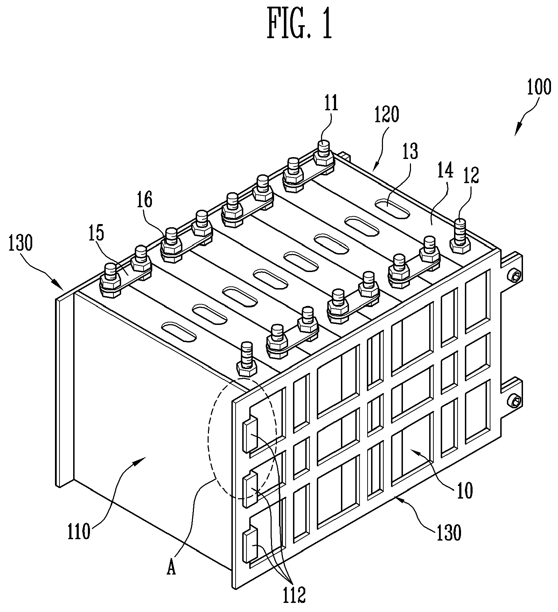

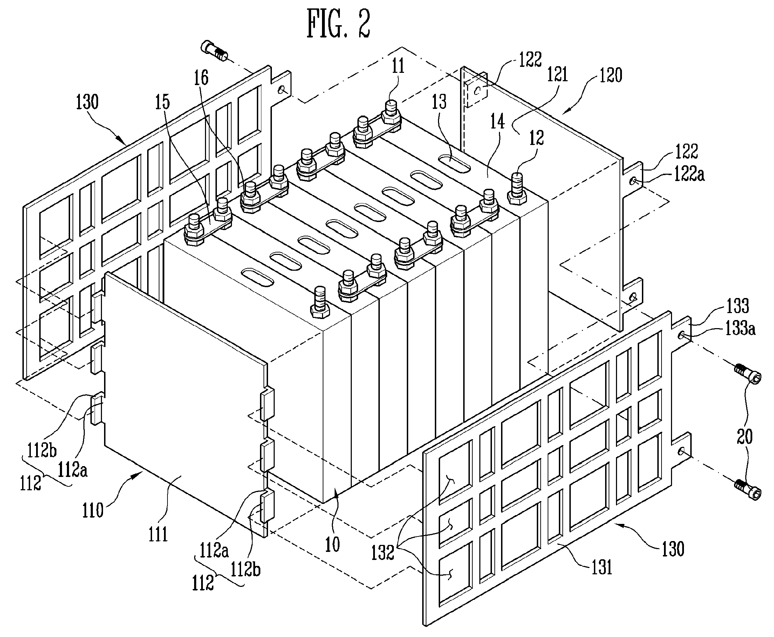

FIG. 1 is a perspective view of a battery module according to an embodiment of the present invention. FIG. 2 is an exploded perspective view of the battery module shown in FIG. 1.

The battery module 100 according to this embodiment includes a plurality of battery cells 10 stacked in one direction and a system containing the battery cell stack by comprising first and second end plates 110 and 120 respectively disposed at end sides of the battery cells 10; and support plates 130 coupled to the first and second end plates 110 and 120. One and the other ends of the support plates 130 are respectively coupled to the first and second end plates 110 and 120, and at least one of the support plates 130 is coupled to at least one of the first and second end plates 110 and 120 by a groove-projection connection.

The battery cell 10 may include a battery case having one opened surface, and an electrode assembly and an electrolyte, accommodated in the battery case. The electrode assembly and the electrolyte generate energy through an electrochemical reaction, and the battery case may be sealed by a first surface 14. For example, the first surface 14 of the battery cell 10 may include a cap assembly. The first surface may be provided with positive and negative electrode terminals 11 and 12 having different polarities, and a vent portion 13. The vent portion 13 is a safety means of the battery cell 10 and acts as a path through which gas generated in the inside of the battery cell 10 is exhausted to the outside of the battery cell 10. Adjacent battery cells 10 may be electrically connected through a bus-bar 15, and the bus-bar 15 may be fixed to the positive and negative electrode terminals 11 and 12 by a nut 16 or the like.

The system includes the first and second end plates 110 and 120 and the support plates 130, and these plates can fix the plurality of battery cells 10 in the one direction in which the batteries are stacked. The first and second end plates 110 and 120 may be provided to face wide surfaces of the outermost battery cells 10, respectively. The first and second end plates 110 and 120 may press the battery cells 10 in the inside direction of the battery cells 10, and the support plates 130 may fix both sides of the stack of the battery cells 10.

One and the other ends of the support plate 130 are respectively coupled to the first and second end plates 110 and 120, and at least one of the support plates 130 is coupled to at least one of the first and second end plates 110 and 120 by the groove-projection connection. The first end plate 110 includes first coupling portions 112 and the second end plate 120 includes second coupling portions 122. Third and fourth coupling portions 132 and 133 may be provided to the one and the other ends of the support plate 130, respectively. The third and fourth coupling portions 132 and 133 may be coupled to the first and second coupling portions 112 and 122, respectively. For example, the first and third coupling portions 112 and 132 may be coupled to each other by the groove-projection connection.

The first and second end plates 110 and 120 may include first and second base portions 111 and 121 facing the battery cells 10, respectively. The first coupling portions 112 may be provided to the first base portion 111 and the second coupling portions 122 may be provided to the second base portion 121. The first and second coupling portions 112 and 122 may be provided to left and right sides of the first and second base portions 111 and 121, respectively.

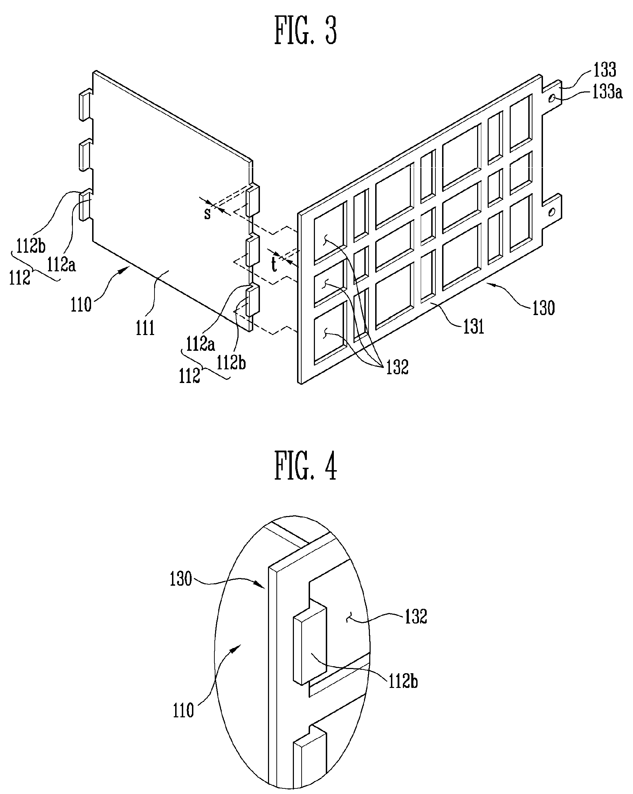

FIG. 3 is a perspective view showing the first end plate and the support plate, shown in FIG. 1. FIG. 4 is an enlarged view showing portion A of FIG. 1.

Referring to FIGS. 3 and 4, the support plate 130 may include a rectangular planar member 131 supporting the sides of the battery cells 10, and the third and fourth coupling portions 132 and 133 respectively provided to one and the other ends of the planar member 131. The third coupling portion 132 may include one or more openings provided the one end of the planar member 131.

Generally, in a battery module, various types of members may be used to fix the alignment state of a plurality of battery cells. Since the battery cells have smooth surfaces, it is difficult to handle the battery cells. As the number of the battery cells increases, a complicated process is required to fix the battery cells, and therefore, the process time of the battery cells is increased. This results in a decrease in productivity of the battery module.

The present invention relates to a battery module having improved productivity by facilitating the coupling between the first and second end plates and the support plates, which are new members. In the battery module, a separate coupling member may be omitted, and thus it is possible to prevent a failure occurring when the coupling member is used to omit a process according to the used of the coupling member.

Each of the first coupling portion 112 of the first end plate 110 may include an extending portion 112a and a bending portion 112b. The extending portions 112a are extended in parallel to the first base portion 111 at both sides of the first base portion 111, and the bending portion 112b may be bent in the opposite direction of the battery cell 10 (See FIG. 1) from the extending portion 112a. The length s of the extending portion 112a is provided to correspond to the thickness t of the support plate 130.

The first end plate 110 and the support plate 130 are coupled to each other by the first and third coupling portions 112 and 132. In this case, a separate coupling member such as a bolt or stud is not required. That is, the support plates 130 are respectively provided at both sides of the first end plate 110 and the first coupling portion 112 then passes through the third coupling portion 132, so that the first end plate 110 and the support plate 130 can be easily arranged with each other. Subsequently, the first and third coupling portions 112 and 132 are overlapped with each other by moving the first end plate 110 in the outside direction of the battery cells 10. Thus, the first end plate 110 and the support plate 130 can be coupled to each other at an exact position without using a separate coupling member.

The length s of the extending portion 112a in the first coupling portion 112 is provided to correspond to the thickness t of the support plate 130. That is, the extending portion 112a and the bending portion 112b in the first coupling portion 112 are provided to surround the third coupling portion 132, so as to fix the third coupling portion 132. Thus, the coupling performance between the first end plate 110 and the support plate 130 can be more improved. As such, a predetermined space is first provided by coupling the first end plate 110 and the support plate 130, and the plurality of battery cells are arranged in the predetermined space.

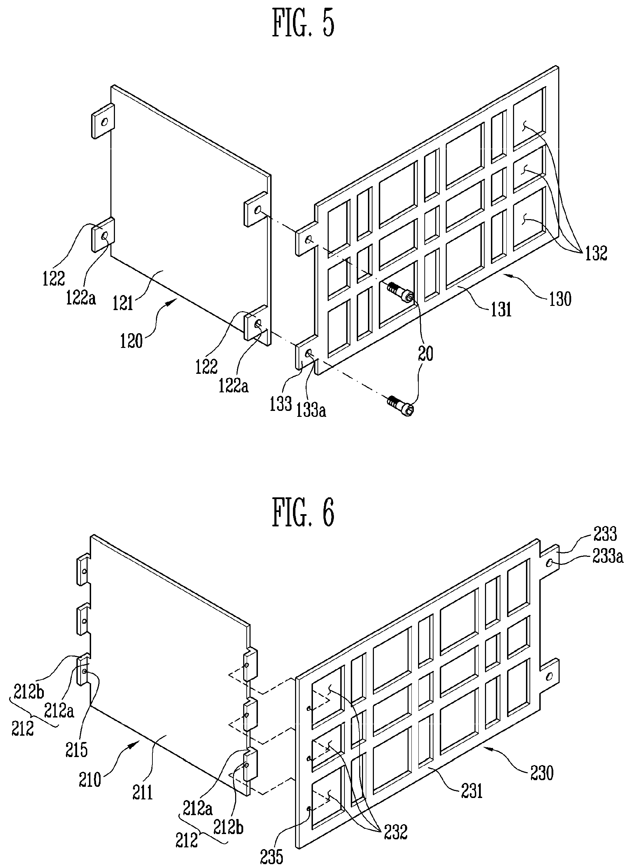

FIG. 5 is a perspective view showing the second end plate and the support plate, shown in FIG. 1.

The support plate 130 may include the third and fourth coupling portions 132 and 133 respectively provided to one and the other ends of the planar member 131. In this case, the fourth coupling may include one or more projection portions extended from the other end of the planar member 131. The second end plate 120 may include the second coupling portions 122 bent to be extended in the opposite direction of the battery cells 10 (See FIG. 1) from the second base portion 121. The second and fourth coupling portions 122 and 133 may include through-holes 122a and 133a provided to correspond to each other.

The sizes of the first and second base portions 111 and 121 respectively provided to the first and second end plates 110 and 120 may be provided to correspond to each other, and the size of the first and second base portions 111 and 121 may correspond to that of the wide surface of the battery cell 10. Therefore, the first end plate 110 and the support plate 130 are first fixed to each other, the plurality of battery cells are pressed in the inside direction thereof in the state in which the plurality of battery cells are arranged. In this case, the second end plate 120 and the support plate 130 are coupled to each other. That is, the second coupling portion 122 of the second end plate 120 is overlapped with the fourth coupling portion 133 of the support plate 130, and the through-holes 122a and 133a respectively provided to the second and fourth coupling portions 122 and 133 may correspond to each other. The through-holes 122a and 133a are coupled by passing a separate coupling member 20 therethrough, and accordingly, the plurality of battery cells can be firmly fixed. For example, the coupling member 20 may be a bolt or stud.

Hereinafter, other embodiments of the present invention will be described with reference to FIGS. 6 to 9. Contents of these embodiments, except the following content, are similar to those of the embodiment described in FIGS. 1 to 5, and therefore, their detailed descriptions will be omitted.

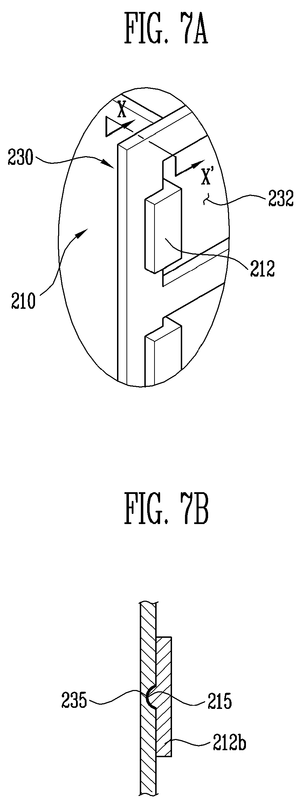

FIG. 6 is a perspective view showing a first end plate and a support plate according to another embodiment of the present invention. FIG. 7A is an enlarged view showing first and third coupling portions. FIG. 7B is a sectional view taken along line X-X' of FIG. 7A.

Referring to FIGS. 6 to 7B, in the battery module according to this embodiment, one end of a support plate 210 may be coupled to a first end plate 210 by a groove-projection connection. The first end plate 210 may include a first base portion 211 and first coupling portions 212 respectively provided at both sides of the first base portion 211. Third coupling portions 232 respectively coupled to the first coupling portions 212 may be provided to one end of the support plate 230.

Each of the first coupling portions 212 may include an extending portion 212a and a bending portion 212b. When the first and third coupling portions 212 and 232 are coupled to each other, the extending portion 212a and the bending portion 212b may be overlapped with each other so as to correspond to the shape of the third coupling portion 232. The bending portion 212b may include one or more projections 215 at the part of the bending portion 212b contacting the support plate 230, and the support plate 230 may include one or more grooves 235 respectively corresponding to the projections 215. Thus, the projections 215 and the grooves 235 are respectively provided at the parts at which the first and second coupling portions 212 and 232 are overlapped with each other, so that the first end plate 210 and the support plate 230 can be more firmly coupled to each other.

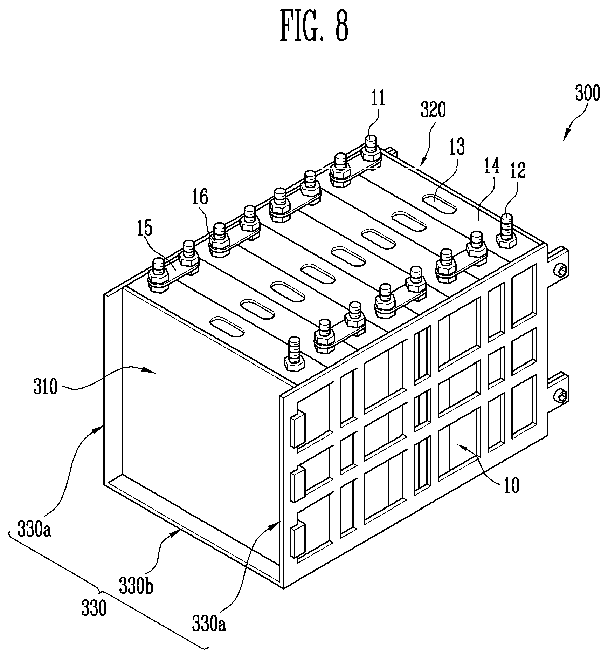

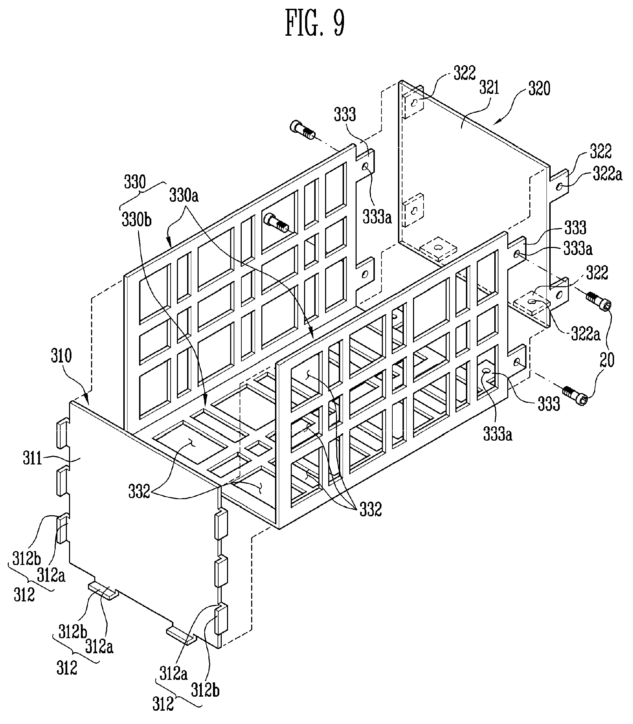

FIG. 8 is a perspective view of a battery module according to still another embodiment of the present invention. FIG. 9 is a perspective view showing first and second end plates and a support plate, shown in FIG. 8.

Referring to FIGS. 8 and 9, the battery module 300 according to this embodiment includes a plurality of battery cells 10, first and second end plates 310 and 320 fixing the battery cells 10, and a support plate 330. The first end plate 310 may be coupled to the support plate 330 without using a separate coupling member 20. For example, one ends of first and second plates 330a and 330b of the support plate 330 may include third coupling portions 332 respectively corresponding to first coupling portions 312 of the first end plate 310, and the other ends of the first and second plates 330a and 330b may include fourth coupling portions 333 respectively corresponding to second coupling portions 322.

The support plate 330 may include a pair of first plates 330a supporting side surfaces of the battery cells 10, and a second plate 330b supporting bottom surfaces of the battery cells 10. The first plates 330a may be integrally provided by being coupled to the second plate 330b. For example, since the pair of first plates 330a are provided to support both sides of the battery cells 10, the first plates 330a are coupled to the second plate 330b, and therefore, the section formed by these plates may be provided to have a 'U' shape.

One ends of the first end plate 310 and the support plate 330 are coupled to each other by coupling the first coupling portion 312 and the third coupling portion 332. Subsequently, the plurality of battery cells 10 are arranged between the first end plate 310 and the support plate 330. The fourth coupling portion 333 is coupled to the second coupling portion 322, so that the second end plate 320 can be coupled to the support plate 330.

In this embodiment, the first and second end plates 310 and 320 may have the first and second coupling portions 312 and 322 provided to not only at both sides but also at bottoms of the first and second base portions 311 and 321. The first and second coupling portions 312 and 322 are coupled to the second plate 330b of the support plate 330, so that the battery module 300 can be more firmly fixed.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. System for containing a stack of battery cells (10) stacked in one direction; the system comprising first (110, 210, 310) and second end plates (120, 220, 320) respectively for disposal at opposing ends of the battery cell stack; and support plates (130, 230, 330) adapted for being coupled to the first (110, 210, 310) and second end plates (120, 220, 320), wherein one and the other ends of the support plates (130, 230, 330) are respectively coupled to the first (110, 210, 310) and second end plates (120, 220, 320), and wherein at least one of the support plates (130, 230, 330) is coupled to at least one of the first (110, 210, 310) and second end plates (120, 220, 320) by an opening-projection connection (112/132, 212/232, 312/332) wherein the projection is formed by the first coupling portion (112, 212, 312) and the opening is formed by the third coupling portion (132, 232, 332) wherein the first end plate (110, 210, 310) includes a first coupling portion (112, 212, 312) and the second end plate (120, 220, 320) includes a second coupling portion (122, 222, 322) and wherein third (132, 232, 332) and fourth coupling portions (133, 233, 333) corresponding to the first (112, 212, 312) and second coupling portions (122, 222, 322) are provided at the one and the other ends of the support plates (130, 230, 330), respectively, wherein the first (110, 210, 310) or second end plate (120, 220, 320) includes a first (111, 211, 311) or second base portion (121, 221, 321) for facing the battery cells (10), respectively and wherein the first coupling portion (112, 212, 312) is provided to the first base portion (111,211, 311) and the second coupling portion (122, 222, 322) is provided to the second base portion (121, 221, 321). wherein the first coupling portion (112, 212, 312) of the first end plate (110, 210, 310) or the second coupling portion of the second end plate includes extending portions (112a, 212a, 312a) respectively extended from both sides of the first (111, 211, 311) or second base portion, and bending portions (112b, 212b, 312b) bent, from each of the extending portions (112a, 212a, 312a), in a direction perpendicular to that of the extending portions (112a, 212a, 312a) and wherein the length of each of the extending portions (112a, 212a, 312a) corresponds to the thickness of a respective one of the support plates (130, 230, 330).

2. System of claim 1 wherein the third coupling portion (132, 232, 332) includes one or more openings and the fourth coupling portion (133, 233, 333) includes one or more projections.

3. System of claim 1 or 2 wherein the bending portion (212b) includes one or more projections (215) at a portion of the bending portion (212b) contacting a respective one of the support plates (230), and the support plates (230) include one or more grooves (235) respectively corresponding to the projections (215).

4. System of one of claims 2 to 3 wherein the second (122, 222, 322) and fourth coupling portions (133, 233, 333) comprise through-holes (122a/133a, 222a/233a, 322a/333a) provided to correspond to each other.

5. System of one of claims 1 to 4 wherein the support plates include a pair of first plates (330a) supporting opposing side surfaces of the battery cell stack, and a second plate (330b) supporting a bottom surface of the battery cell stack connecting the opposing side surfaces.

6. System of claim 5 wherein the first plates (330a) are provided integrally with the second plate (330b).

7. System of claim 5 or 6 wherein the first (310) and second end plates (320) have the first (312) and second coupling portions (322) provided to not only at both sides but also at bottoms of the first (311) and second base portions (321), the first (312) and second coupling portions (322) at the bottoms being adapted for being coupled to the second plate (330b).

8. Battery module (100) comprising a stack of battery cells (10) and a system according to one of the preceding claims, the stack of battery cells being contained in the system.

## Patentansprüche

1. System zum Aufnehmen eines Stapels aus Batteriezellen (10), die in einer Richtung gestapelt sind; wobei das System jeweils erste Endplatten (110, 210, 310) und zweite Endplatten (120, 220, 320) zur Anordnung an gegenüberliegenden Enden des Batteriezellenstapels; und Trägerplatten (130, 230, 330), die angepasst sind, um mit den ersten Endplatten (110, 210, 310) und den zweiten Endplatten (120, 220, 320) gekoppelt zu werden, aufweist, wobei das eine und das andere Ende der Trägerplatten (130, 230, 330) jeweils mit den ersten Endplatten (110, 210, 310) und den zweiten Endplatten (120, 220, 320) gekoppelt sind, und wobei mindestens eine der Trägerplatten (130, 230, 330) mit mindestens einer der ersten Endplatten (110, 210, 310) und zweiten Endplatten (120, 220, 320) durch eine Öffnung-Vorsprung-Verbindung (112/132, 212/232, 312/332) gekoppelt ist, wobei der Vorsprung durch den ersten Kopplungsabschnitt (112, 212, 312) gebildet ist und die Öffnung durch den dritten Kopplungsabschnitt (132, 232, 332) gebildet ist, wobei die erste Endplatte (110, 210, 310) einen ersten Kopplungsabschnitt (112, 212, 312) aufweist und die zweite Endplatte (120, 220, 320) einen zweiten Kopplungsabschnitt (122, 222, 322) aufweist, und wobei dritte Kopplungsabschnitte (132, 232, 332) und vierte Kopplungsabschnitte (133, 233, 333), die den ersten Kopplungsabschnitten (112, 212, 312) und zweiten Kopplungsabschnitten (122, 222, 322) entsprechen, jeweils an dem einen und dem anderen Ende der Trägerplatten (130, 230, 330) vorgesehen sind, wobei die erste Endplatte (110, 210, 310) oder zweite Endplatte (120, 220, 320) einen ersten Bodenabschnitt (111, 211, 311) oder zweiten Bodenabschnitt (121, 221, 321) aufweist, um den Batteriezellen (10) jeweils gegenüberzuliegen, und wobei der erste Kopplungsabschnitt (112, 212, 312) für den ersten Bodenabschnitt (111, 211, 311) vorgesehen ist und der zweite Kopplungsabschnitt (122, 222, 322) für den zweiten Bodenabschnitt (121, 221, 321) vorgesehen ist, wobei der erste Kopplungsabschnitt (112, 212, 312) der ersten Endplatte (110, 210, 310) oder der zweite Kopplungsabschnitt der zweiten Endplatte sich erweiternde Abschnitte (112a, 212a, 312a), die sich jeweils von beiden Seiten des ersten Bodenabschnitts (111, 211, 311) oder des zweiten Bodenabschnitts erstrecken, und sich biegende Abschnitte (112b, 212b, 312b), die sich von jedem der sich erstreckenden Abschnitte (112a, 212a, 312a) in einer Richtung senkrecht zu jener der sich erstreckenden Abschnitte (112a, 212a, 312a) biegen, aufweist, und wobei die Länge jedes der sich erstreckenden Abschnitte (112a, 212a, 312a) der Dicke einer jeweiligen der Trägerplatten (130, 230, 330) entspricht.

2. System nach Anspruch 1, wobei der dritte Kopplungsabschnitt (132, 232, 332) eine oder mehrere Öffnungen aufweist und der vierte Kopplungsabschnitt (133, 233, 333) einen oder mehrere Vorsprünge aufweist.

3. System nach Anspruch 1 oder 2, wobei der sich biegende Abschnitt (212b) einen oder mehrere Vorsprünge (215) an einem Abschnitt des sich biegenden Abschnitts (212b) aufweist, der eine jeweilige der Trägerplatten (230) berührt, und die Trägerplatten (230) jeweils eine oder mehrere Nuten (235) entsprechend den Vorsprüngen (215) aufweisen.

4. System nach einem der Ansprüche 2 bis 3, wobei die zweiten Kopplungsabschnitte (122, 222, 322) und vierten Kopplungsabschnitte (133, 233, 333) Durchgangsbohrungen (122a/133a, 222a/233a, 322a/333a) aufweisen, die vorgesehen sind, um sich gegenseitig zu entsprechen.

5. System nach einem der Ansprüche 1 bis 4, wobei die Trägerplatten ein Paar an ersten Platten (330a), die gegenüberliegende Seitenflächen des Batteriezellenstapels tragen, und eine zweite Platte (330b), die eine untere Fläche des Batteriezellenstapels trägt, die die gegenüberliegenden Seitenflächen verbindet, umfassen.

6. System nach Anspruch 5, wobei die ersten Platten (330a) einstückig mit der zweiten Platte (330b) vorgesehen sind.

7. System nach Anspruch 5 oder 6, wobei der erste Kopplungsabschnitt (312) und der zweite Kopplungsabschnitt (322) der ersten Endplatten (310) und zweiten Endplatten (320) nicht nur an beiden Seiten sondern auch an Unterseiten des ersten Bodenabschnitts (311) und des zweiten Bodenabschnitts (321) vorgesehen sind, wobei der erste Kopplungsabschnitt (312) und der zweite Kopplungsabschnitt (322) an den Unterseiten angepasst sind, um mit der zweiten Platte (330b) gekoppelt zu werden.

8. Batteriemodul (100) umfassend einen Stapel aus Batteriezellen (10) und ein System nach einem der vorherigen Ansprüche, wobei der Stapel aus Batteriezellen in dem System enthalten ist.

## Revendications

1. Système pour contenir un empilement d'éléments de batterie (10) empilés dans une direction ; le système comprenant des première (110, 210, 310) et deuxième (120, 220, 320) plaques d'extrémité destinées à être disposées respectivement au niveau d'extrémités opposées de l'empilement d'éléments de batterie ; et des plaques de support (130, 230, 330) adaptées pour être couplées aux première (110, 210, 310) et deuxième (120, 220, 320) plaques d'extrémité, dans lequel l'une et l'autre des extrémités des plaques de support (130, 230, 330) sont respectivement couplées aux première (110, 210, 310) et deuxième (120, 220, 320) plaques d'extrémité, et dans lequel au moins l'une des plaques de support (130, 230, 330) est couplée à au moins l'une des première (110, 210, 310) et deuxième (120, 220, 320) plaques d'extrémité par une liaison ouverture-saillie (112/132, 212/232, 312/332), dans lequel la saillie est formée par la première partie de couplage (112, 212, 312) et l'ouverture est formée par la troisième partie de couplage (132, 232, 332), dans lequel la première plaque d'extrémité (110, 210, 310) comporte une première partie de couplage (112, 212, 312) et la deuxième plaque d'extrémité (120, 220, 320) comporte une deuxième partie de couplage (122, 222, 322) et dans lequel des troisième (132, 232, 332) et quatrième (133, 233, 333) parties de couplage correspondant aux première (112, 212, 312) et deuxième (122, 222, 322) parties de couplage sont prévues au niveau de l'une et de l'autre des extrémités des plaques de support (130, 230, 330), respectivement, dans lequel la première (110, 210, 310) ou deuxième (120, 220, 320) plaque d'extrémité comporte une première (111, 211, 311) ou deuxième (121, 221, 321) partie de base pour faire face aux éléments de batterie (10), respectivement, et dans lequel la première partie de couplage (112, 212, 312) est prévue sur la première partie de base (111, 211, 311) et la deuxième partie de couplage (122, 222, 322) est prévue sur la deuxième partie de base (121, 221, 321), dans lequel la première partie de couplage (112, 212, 312) de la première plaque d'extrémité (110, 210, 310) ou la deuxième partie de couplage de la deuxième plaque d'extrémité comporte des parties d'extension (112a, 212a, 312a), s'étendant respectivement à partir des deux côtés de la première (111, 211, 311) ou deuxième partie de base, et des parties de pliage (112b, 212b, 312b) pliées, à partir de chacune des parties d'extension (112a, 212a, 312a), dans une direction perpendiculaire à celle des parties d'extension (112a, 212a, 312a), et dans lequel la longueur de chacune des parties d'extension (112a, 212a, 312a) correspond à l'épaisseur d'une plaque respective des plaques de support (130, 230, 330).

2. Système de la revendication 1, dans lequel la troisième partie de couplage (132, 232, 332) comporte une ou plusieurs ouvertures et la quatrième partie de couplage (133, 233, 333) comporte une ou plusieurs saillies.

3. Système de la revendication 1 ou 2, dans lequel la partie de pliage (212b) comporte une ou plusieurs saillies (215) au niveau d'une partie de la partie de pliage (212b) venant en contact avec une plaque respective des plaques de support (230), et les plaques de support (230) comportent une ou plusieurs rainures (235) correspondant respectivement aux saillies (215).

4. Système de l'une des revendications 2 à 3, dans lequel les deuxième (122, 222, 322) et quatrième (133, 233, 333) parties de couplage comprennent des trous traversants (122a/133a, 222a/233a, 322a/333a) prévus de manière à correspondre les uns aux autres.

5. Système de l'une des revendications 1 à 4, dans lequel les plaques de support comportent une paire de premières plaques (330a) supportant des surfaces latérales opposées de l'empilement d'éléments de batterie, et une deuxième plaque (330b) supportant une surface inférieure de l'empilement d'éléments de batterie reliant les surfaces latérales opposées.

6. Système de la revendication 5, dans lequel les premières plaques (330a) sont prévues d'un seul tenant avec la deuxième plaque (330b).

7. Système de la revendication 5 ou 6, dans lequel les première (310) et deuxième (320) plaques d'extrémité présentent les première (312) et deuxième (322) parties de couplage prévues non seulement au niveau des deux côtés, mais également au niveau de parties inférieures des première (311) et deuxième (321) parties de base, les première (312) et deuxième (322) parties de couplage au niveau des parties inférieures étant adaptées pour être couplées à la deuxième plaque (330b).

8. Module de batterie (100) comprenant un empilement d'éléments de batterie (10) et un système selon l'une des revendications précédentes, l'empilement d'éléments de batterie étant contenu dans le système.
